# EUROPÄISCHE PATENTSCHRIFT

(11) **EP 3 080 473 B1**
(45) Veröffentlichungstag und Bekanntmachung des Hinweises auf die Patenterteilung: **21.08.2019**
(21) Anmeldenummer: 14814750.7
(22) Anmeldetag: 14.11.2014
(51) Int. Cl.: F16D 25/12, F16D 48/02

(54) **HYDRAULIKANORDNUNG FÜR DOPPELKUPPLUNG SOWIE VERFAHREN ZUM ANSTEUERN ODER KÜHLEN DER DOPPELKUPPLUNG**
HYDRAULIC ARRANGEMENT FOR A DUAL CLUTCH AND METHOD FOR ACTUATING OR COOLING THE DUAL CLUTCH
SYSTÈME HYDRAULIQUE POUR DOUBLE EMBRAYAGE AINSI QUE PROCÉDÉ DE COMMANDE OU DE REFROIDISSEMENT DU DOUBLE EMBRAYAGE

(30) Priorität: 09.12.2013 DE 102013225319
(43) Veröffentlichungstag der Anmeldung: 19.10.2016
(73) Patentinhaber: Schaeffler Technologies AG & Co. KG, 91074 Herzogenaurach (DE)
(72) Erfinder: NISSEN, Hanjo, 77830 Bühlertal (DE); GRETHEL, Marco, 77830 Bühlertal (DE); WILLEKE, Roshan, 77815 Bühl (DE)
(86) Internationale Anmeldenummer: PCT/DE2014/200635
(87) Internationale Veröffentlichungsnummer: WO 2015/086009

(56) Entgegenhaltungen:
- DE-A1- 3 917 243
- DE-A1-102010 032 657
- DE-A1-102011 084 584

## Beschreibung

Die Erfindung betrifft eine Hydraulikanordnung mit einzelnen Merkmalen des Anspruchs 1 sowie ein Verfahren mit einzelnen Merkmalen des unabhängigen Verfahrensanspruchs.

In vielen automatisierten Schaltgetrieben kommt es während des Schaltvorgangs beim Öffnen der Kupplung zu einer Zugkraftunterbrechung im Antriebsstrang. Insbesondere bei Nutzfahrzeugen sind Zugkraftunterbrechungen besonders nachteilig, da sie zu einem Absenken der Fahrgeschwindigkeit führen, insbesondere bei Bergfahrten. Damit gehen Verkehrsbehinderungen einher. Das Beschleunigen des Fahrzeugs auf die ursprüngliche Geschwindigkeit erfordert nicht nur am Berg sondern auch in der Ebene viel Zeit und Energie. Insbesondere bei Nutzfahrzeugen wird dieser Nachteil noch deutlicher, da Motoren bei Nutzfahrzeugen das erforderliche Drehmoment nur in einem schmalen Drehzahlbereich zur Verfügung stellen können.

Wenn durch die Zugkraftunterbrechung die Fahrgeschwindigkeit und damit auch die Motordrehzahl einbricht, befindet sich das Nutzfahrzeug in der nächsten Fahrstufe möglicherweise nicht mehr im Bereich des Drehmomentmaximums. Mit anderen Worten ist der Motor in der nächsten Fahrstufe möglicherweise weniger effizient(leistungsfähig), was dazu führen kann, dass sich die Fahrgeschwindigkeit weiter verringert. Ein extremes Beispiel sind Lastkraftwagen, bei welchen an einem steilen Berg eine Fahrgeschwindigkeit von 80 km/h auf unter 70 km/h absinkt. Daher erfordert der Beschleunigungsvorgang auf die ursprüngliche Fahrgeschwindigkeit zusätzliche Zeit, und es wird zusätzlicher Kraftstoff verbraucht. Daher besteht ein Bedarf an einer Kupplungsanordnung, bei welcher eine Zugkraftunterbrechung gar nicht mehr auftritt.

Die Kupplung wird meist auf hydraulische Weise angesteuert, wobei ein Hydraulikfluid mit einem Soll-Druck durch eine Pumpe bereitgestellt werden kann, welche durch einen oder mehrere Motoren des Fahrzeugs angetrieben wird. Die DE 10 2011 084 584 beschreibt eine Hydraulikanordnung zur Kühlung mindestens einer Kupplung einer Doppelkupplung eines Fahrzeugs mit einer Verstellpumpe zur Bereitstellung des Hydraulikfluids.

Die DE 10 2008 058 080 A1 beschreibt ein Hydraulikversorgungssystem mit einer Pumpe, einem Verbrennungsmotor und einem Elektromotor, wobei der Elektromotor zum Antrieb der Pumpe bei stillstehendem Verbrennungsmotor vorgesehen ist.

Zum zeitlichen Verkürzen der Zugkraftunterbrechung sind bereits Maßnahmen bekannt, welche darauf abzielen, Hydraulikfluid zum Ansteuern von Kupplungen, insbesondere der beiden Kupplungen einer Doppelkupplung, kontinuierlich bereitzustellen. Eine Doppelkupplung kann sicherstellen, dass eine Zugkraftunterbrechung minimiert oder eliminiert wird. Es sind Pumpen bekannt, welche eingerichtet sind, das Hydraulikfluid für beide Kupplungen bereitzustellen.

Die WO 2011/072639 A1 und die WO 2010/127659 A1 beschreiben jeweils eine hydraulische Anordnung, bei welcher eine Pumpe zum Bereitstellen eines bestimmten Volumenstroms eines Hydraulikfluids für zwei Kupplungen zumindest durch einen Elektromotor angetrieben werden kann. Die WO 2011/072639 A1 basiert auf dem Konzept, einen drehzahlgeregelten Elektromotor zum Antreiben der Pumpe zu verwenden. Die WO 2010/127659 A1 basiert auf dem Konzept, zwei Elektromotoren in Verbindung mit zwei Volumenstromquellen bereitzustellen, insbesondere einer ersten Volumenstromquelle, die von einem der Elektromotoren angetrieben wird, sowie einer zweiten Volumenstromquelle, die von einer Brennkraftmaschine unabhängig ist.

Es ist eine Aufgabe der vorliegenden Erfindung, eine Kühlung und/oder Ansteuerung mindestens einer Kupplung einer Doppelkupplung eines Doppelkupplungsgetriebes, auf einfache Weise, insbesondere kostengünstige Weise, zu realisieren, wobei eine Zugkraftunterbrechung zeitlich möglichst komplett vermieden werden soll. Dabei besteht auch Interesse an einer lastschaltbaren, energieeffizienten Anordnung.

Die Aufgabe wird gelöst durch eine Hydraulikanordnung zur Ansteuerung und/oder Kühlung mindestens einer Kupplung einer Doppelkupplung, insbesondere eines Doppelkupplungsgetriebes, eines Fahrzeugs, insbesondere eines Nutzfahrzeugs wie einem Lastkraftwagen, mit:
- einer Pumpe zum Bereitstellen eines Hydraulikfluids für die mindestens eine Kupplung, insbesondere zum Ansteuern oder Kühlen der mindestens einen Kupplung;
- einem Verbrennungsmotor, der zum Antreiben der Pumpe eingerichtet ist;
- einem Kupplungsdruckzweig zum Bereitstellen des Hydraulikfluids zum Ansteuern;
- einem Kühlungszweig zum Bereitstellen des Hydraulikfluid zum Kühlen;
bei welcher die Pumpe als eine Verstellpumpe mit verstellbarem Fördervolumen ausgebildet ist.

Mittels der Verstellpumpe kann die geförderte Menge von Hydraulikfluid bedarfsgerecht eingestellt werden, obgleich nur ein einzelner Motor vorgesehen ist. Das Hydraulikfluid kann dabei auch für beide Kupplungen einer Doppelkupplung bereitgestellt werden. Das Antreiben der Verstellpumpe kann dabei auf rein mechanische Weise erfolgen. Eine solche Hydraulikanordnung kann auch für eine Betriebsweise unter Volllast verwendet werden.

Im Gegensatz dazu erfolgt bei vorbekannten Hydraulikanordnungen ein Antreiben der Pumpe in vielen Fällen mittels einer Konstantpumpe, welche das Hydraulikfluid in Abhängigkeit der Drehzahl des für die Pumpe vorgesehenen Antriebs mit einem bestimmten Fördervolumen bereitstellt. Das Fördervolumen wird dabei unabhängig von einem aktuellen Bedarf bereitgestellt, was nicht energieeffizient ist. Mit anderen Worten stellt sich bei Konstantpumpen bei hohen Motordrehzahlen, aber geringen Volumenstrombedarf, automatisch eine schlechte Effizienz ein, insbesondere da mehr Hydraulikmedium gefördert wird als erforderlich.

In einigen Fällen erfolgt ein Antreiben der Pumpe zumindest auch mittels eines Elektromotors, also sowohl mittels einer mechanischen als auch einer elektromotorischen Komponente. Der Elektromotor kann dabei sicherstellen, dass der Verbrennungsmotor unterstützt wird, z.B. wenn der Verbrennungsmotor nur mit einer kleinen Drehzahl betrieben wird. Zwar kann das Antreiben möglicherweise auch allein mittels eines Elektromotors erfolgen, insbesondere in Verbindung mit einem Planetengetriebe, jedoch stellt dieser Elektromotor eine zusätzliche Antriebskomponente dar, welche Kosten verursacht und welche angesteuert werden muss und das Planetengetriebe verursacht ebenfalls nicht unerhebliche Kosten. Eine Kombination von mechanischem und elektrischem Antrieb kann die bei rein mechanisch angetriebenen Konstantpumpen entstehende Verlustleistungen zwar reduzieren, verursacht aber hohe Kosten.

Als ein Antreiben der Pumpe ist dabei bevorzugt ein Bereitstellen von Antriebsenergie zu verstehen, und zwar derart, dass die Pumpe das Hydraulikfluid mit dem für das Ansteuern und/oder Kühlen der Kupplungen erforderlichen Druck bzw. Volumen bereitstellen kann.

Als Kupplungsdruckzweig ist dabei bevorzugt ein Teil der Hydraulikanordnung zu verstehen, in welchem mittels Hydraulikfluid ein Druck zum Ansteuern der beiden Kupplungen aufgebaut wird. Der Kupplungsdruckzweig umfasst dabei bevorzugt zumindest die dazu erforderlichen Hydraulikleitungen und Ventile. Der Kupplungsdruckzweig umfasst insbesondere mindestens zwei bevorzugt direkt angesteuerte Kupplungsdruckregler, die über eine Hauptdruckleitung mit der Verstellpumpe verbunden sind. Der Kupplungsdruckzweig kann auch als Ansteuerungszweig bezeichnet werden.

Als Kühlungszweig ist dabei bevorzugt ein Teil der Hydraulikanordnung zu verstehen, in welchem mittels Hydraulikfluid ein Druck zum Kühlen der beiden Kupplungen aufgebaut wird. Der Kühlungszweig umfasst dabei zumindest die dazu erforderlichen Hydraulikleitungen und Ventile. Der Kühlungszweig umfasst insbesondere ein Ableitungsventil und ein Vorsteuerventil für das Ableitungsventil, ein Kupplungskühlungsventil und ein Vorsteuerventil für das Kupplungskühlungsventil (und optional auch ein direkt gesteuertes Kupplungskühlungsventil), ein Druckbegrenzungsventil sowie eine Saugstrahlpumpe. Der Kühlungszweig kann auch um ein weiteres Kupplungskühlungsventil und ein weiteres Vorsteuerventil sowie eine zweite Saugstrahlpumpe erweitert werden, insbesondere zwecks separater Kühlung jeder der beiden Kupplungen einer Doppelkupplung. Eine Saugstrahlpumpe wandelt dabei Hydraulikfluid hohen Drucks zu Hydraulikfluid niederen Drucks unter Vermehrung des Volumenstroms des Hydraulikfluids.

Bevorzugt ist die Hydraulikanordnung eingerichtet, sowohl das Ansteuern als auch das Kühlen mittels der Verstellpumpe vorzunehmen. Dabei können sowohl der Kühlungszweig als auch der Kupplungsdruckzweig allein mittels der Verstellpumpe betrieben werden, also mit Hydraulikfluid beaufschlagt werden. Eine separate Kühlölpumpe ist nicht erforderlich.

Die Erfindung basiert dabei auf der Erkenntnis, dass bei einer Hydraulikanordnung mit einer Verstellpumpe die Antriebsenergie für die Pumpe alleine aus dem Verbrennungsmotor bezogen werden kann, und dass gleichzeitig auch die Förderleistung (Volumenstrom des geförderten Hydraulikfluids) bedarfsgerecht eingestellt werden. Dank der Verstellmöglichkeit der Verstellpumpe können möglicherweise durch einen zu großen Volumenstrom hervorgerufene Verluste minimiert werden. Die Verstellpumpe ist eingerichtet, das Fördervolumen pro Umdrehung einzustellen.

Die Verstellpumpe kann sicherstellen, dass bei einer besonders hohen Drehzahl des Verbrennungsmotors keine zu große Menge an Hydraulikfluid gefördert wird, oder dass bei einer besonders kleinen Drehzahl des Verbrennungsmotors keine zu geringe Menge an Hydraulikfluid gefördert wird. Die Pumpe kann z.B. bei niedriger Drehzahl des Verbrennungsmotors und hoher Volumenstromforderung auf ein großes Fördervolumen eingestellt werden. Selbst bei niedrigen Motordrehzahlen kann damit eine ausreichend große Förderleistung erzielt werden. Bei hoher Antriebsdrehzahl und geringem Volumenstrombedarf kann das Fördervolumen reduziert werden. Dadurch kann auch das Pumpenmoment und damit die Leistungsaufnahme der Pumpe abgesenkt werden. Dabei kann z.B. auch eine Verstellpumpe mit relativ großem Fördervolumen vorgesehen werden, ohne dass bei hohen Motordrehzahlen eine hohe Verlustleistung hervorgerufen wird.

Die Hydraulikanordnung eignet sich insbesondere zur Anordnung in schweren und mittelschweren Nutzfahrzeugen für den Fernverkehr, in Kippern für den Baustelleneinsatz oder für den Stadt-Verteilerverkehr. Die Hydraulikanordnung weist dabei eine hohe Energieeffizienz auf. Mittels der Hydraulikanordnung können alle Gänge eines angesteuerten Getriebes lastschaltbar sein.

Als Verstellpumpe ist dabei bevorzugt allgemein eine Pumpe zu verstehen, deren Fördervolumen bzw. Verdrängungsvolumen verstellbar ist. Im Gegensatz dazu kann bei Konstantpumpen bei jeder Umdrehung immer nur das gleiche Volumen verdrängt werden. Insbesondere kann die Verstellpumpe eine Flügelzellenpumpe bzw. Drehschieberpumpe oder eine Axialkolbenpumpe oder eine Pendelschieberpumpe sein.

Mittels der Verstellpumpe kann die Hydraulikanordnung flexibel auf einen aktuellen Volumenstrombedarf reagieren, insbesondere unabhängig von der aktuellen Drehzahl des Verbrennungsmotors. Dabei muss eine Ansteuerung nicht notwendigerweise in Verbindung mit einer Kühlung erfolgen. Beispielsweise kann allein ein Kühlen erfolgen (Nachkühlen), oder es kann allein ein Ansteuern erfolgen, ohne dass gekühlt wird.

Die Hydraulikanordnung kann dabei auch die Doppelkupplung oder wahlweise auch ein die Doppelkupplung beinhaltendes Doppelkupplungsgetriebe umfassen, insbesondere ein Doppelkupplungsgetriebe eines Lastkraftwagens (LKW). Die Verstellpumpe ermöglicht eine energetisch optimierte Ausgestaltung der Hydraulikanordnung bzw. des Doppelkupplungsgetriebes, wobei die in Verbindung mit Doppelkupplungsgetrieben entstehenden Vorteile, insbesondere keine oder nicht spürbare Zugkraftunterbrechungen, auf einfache und kostengünstige Weise genutzt werden können.

Gemäß einem Ausführungsbeispiel ist die Hydraulikanordnung eingerichtet, die Verstellpumpe ausschließlich mittels des Verbrennungsmotors anzutreiben. Es hat sich gezeigt, dass die Doppelkupplung nicht nur über den Verbrennungsmotor und einen zusätzlichen Elektromotor angesteuert werden kann, sondern bereits allein mittels des Verbrennungsmotors. Dies kann erzielt werden, wenn eine verstellbare Pumpe vorgesehen wird. Es ist z.B. kein Summiergetriebe erforderlich, um den Pumpenantrieb sicherzustellen. Vielmehr besteht eine einfachere und kostengünstigere Lösung darin, auf ein Summiergetriebe bzw. den Elektromotor zu verzichten und die Ansteuerung und/oder Kühlung der Doppelkupplung allein mittels einer Verstellpumpe und dem Verbrennungsmotor sicherzustellen. Würde eine nicht verstellbare Konstantpumpe verwendet werden, so müsste die Konstantpumpe derart groß dimensioniert werden, dass die erforderlichen Volumenströme auch bei niedrigen Motordrehzahlen sichergestellt werden können. Eine solche Überdimensionierung ruft jedoch bei hohen Drehzahlen zu große, nicht benötigte Volumenströme hervor und ist in energetischer Hinsicht sehr ineffizient.

Gemäß einem Ausführungsbeispiel weist die Hydraulikanordnung eine Verstelleinrichtung zum Verstellen des Fördervolumens der Verstellpumpe auf, wobei die Verstelleinrichtung bevorzugt elektrisch, hydraulisch oder elektrohydraulisch ansteuerbar ist.

Als Verstelleinrichtung ist dabei bevorzugt irgendein Aktor zu verstehen, welcher bevorzugt elektrisch, hydraulisch oder elektrohydraulisch angesteuert werden kann. Die Verstelleinrichtung kann auch zumindest teilweise durch eine Komponenten der Verstellpumpe gebildet sein.

Gemäß einem Ausführungsbeispiel weist die Hydraulikanordnung eine mechanische und/oder hydraulische Übersetzung zum Verstellen des Fördervolumens der Verstellpumpe auf. Die mechanische Übersetzung kann z.B. in Form eines Hebels bereitgestellt werden. Die Verstelleinrichtung kann die mechanische und/oder Übersetzung aufweisen oder mit dieser in Wirkverbindung stehen. Die mechanische Übersetzung kann robust ausgestaltet sein und das Verstellen der Verstellpumpe erleichtern, insbesondere einen dazu erforderlichen Steuerdruck oder eine Kraft niedrig halten.

Erfindungsgemäß weist die Hydraulikanordnung eine Steuerungseinrichtung auf, die eingerichtet ist, das Fördervolumen der Verstellpumpe in Abhängigkeit einer Drehzahl des Verbrennungsmotors und der Bedarfssituation einzustellen.

Die Steuerungseinrichtung ist bevorzugt eingerichtet, bei einer niedrigen Drehzahl ein großes Fördervolumen einzustellen, und das Fördervolumen mit steigender Drehzahl zu senken und umgekehrt mit sinkender Drehzahl zu erhöhen. Die Steuerungseinrichtung ist dabei auch eingerichtet, einen aktuellen Volumenstrombedarf zu berücksichtigen und das Fördervolumen in Hinblick auf den Volumenstrombedarf unabhängig von der Drehzahl einzustellen. Die Steuerungseinrichtung ist eingerichtet, das Fördervolumen der Verstellpumpe bedarfsabhängig einzustellen. Bevorzugt weist die Steuerungseinrichtung zwei Schnittstellen auf, über welche sie sowohl mit dem Verbrennungsmotor als auch mit der Verstellpumpe verbunden ist.

Gemäß einem Ausführungsbeispiel weist der Kühlungszweig sowohl eine erste Kupplungskühlung als auch eine zweite Kupplungskühlung auf, wobei die Steuerungseinrichtung eingerichtet ist, die Hydraulikanordnung derart anzusteuern, dass das Hydraulikfluid mittels der Verstellpumpe sowohl für die erste Kupplungskühlung als auch für die zweite Kupplungskühlung bereitgestellt wird. Hierdurch kann jede Kupplung der Doppelkupplung separat gekühlt werden. Hierdurch können insbesondere Schleppverluste minimiert werden.

Die Aufgabe wird auch gelöst durch eine Steuerungseinrichtung, insbesondere ein Getriebesteuergerät, zum Ansteuern einer Hydraulikanordnung für eine Doppelkupplung, insbesondere eines Doppelkupplungsgetriebes eines Fahrzeugs, insbesondere eines Nutzfahrzeugs wie einem Lastkraftwagen, mit mindestens einer Schnittstelle zu einem Verbrennungsmotor der Hydraulikanordnung und zu einer Pumpe der Hydraulikanordnung, wobei die Steuerungseinrichtung eingerichtet ist, ein Signal zum Einstellen eines Fördervolumens einer Pumpe auszugeben, insbesondere in Abhängigkeit einer Drehzahl des Verbrennungsmotors. Eine solche Steuerungsvorrichtung kann sicherstellen, dass die Förderleistung der Verstellpumpe auf den Betriebszustand des Verbrennungsmotors abgestimmt wird. Hierdurch ergeben sich die zuvor im Zusammenhang mit der Hydraulikanordnung beschriebenen Vorteile. Bevorzugt weist die Steuerungseinrichtung eine erste Schnittstelle zum Verbrennungsmotor sowie eine zweite Schnittstelle zur Pumpe auf. Das Signal wird bevorzugt über die zweite Schnittstelle zur Pumpe an die Pumpe oder an eine Verstelleinrichtung weitergeleitet, welche zwischen der Steuerungseinrichtung und der Pumpe angeordnet ist.

Die Aufgabe wird auch gelöst durch ein Verfahren zum Ansteuern und/oder Kühlen mindestens einer Kupplung einer Doppelkupplung, insbesondere der Kupplungen eines Doppelkupplungsgetriebes eines Fahrzeugs, insbesondere eines Nutzfahrzeugs wie einem Lastkraftwagen, mit den Schritten:
- Bereitstellen eines Hydraulikfluids mittels einer Verstellpumpe sowohl in einem Kupplungsdruckzweig als auch einem Kühlungszweig einer Hydraulikanordnung;
- Ansteuern und/oder Kühlen der mindestens einer Kupplung durch Antreiben der Verstellpumpe mittels eines Verbrennungsmotors der Hydraulikanordnung, insbesondere ausschließlich mittels des Verbrennungsmotors. Bei diesem Verfahren ist es nicht erforderlich, einen Elektromotor zum Antreiben der Pumpe zu verwenden. Hierdurch ergeben sich die zuvor im Zusammenhang mit der Hydraulikanordnung beschriebenen Vorteile. Insbesondere ist eine Ansteuerung irgendeines Elektromotors nicht erforderlich.

Beim Verfahren kann eine Steuerungseinrichtung kontinuierlich die Drehzahl des Verbrennungsmotors überwachen und ein Fördervolumen der Verstellpumpe in Abhängigkeit der Drehzahl einstellen. Das Verfahren kann ferner mindestens einen der folgenden Schritte umfassen: Leiten eines überschüssigen Volumenstroms in den Kühlungszweig; und/oder Leiten eines überschüssigen Volumenstroms zum Sauganschluss der Verstellpumpe.

In den nachfolgenden Figuren wird die Erfindung näher erläutert. Es zeigen:
Fig. 1 in schematischer Darstellung eine Hydraulikanordnung gemäß einem ersten Ausführungsbeispiel der Erfindung;
Fig. 2a in schematischer Darstellung in einer ersten Variante eine Verstelleinrichtung für die in Fig. 1 gezeigte Hydraulikanordnung;
Fig. 2b in schematischer Darstellung in einer zweiten Variante eine Verstelleinrichtung für die in Fig. 1 gezeigte Hydraulikanordnung;
Fig. 3 in schematischer Darstellung in einer ersten Variante einen Kühlungsdruckregler für die in Fig. 1 gezeigte Hydraulikanordnung; und
Fig. 4 in schematischer Darstellung in einer zweiten Variante einen Kühlungsdruckregler für die in Fig. 1 gezeigte Hydraulikanordnung.

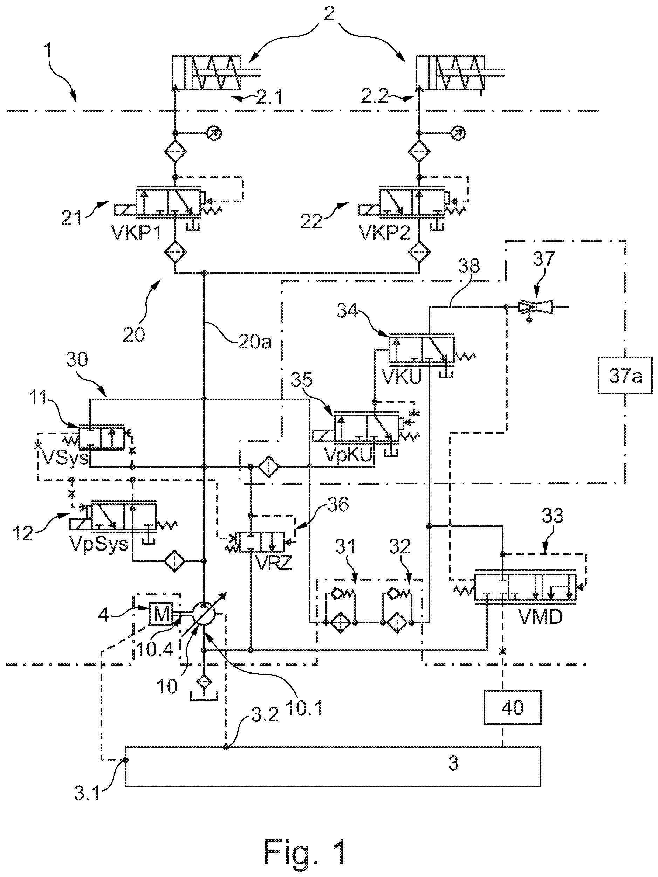

In der Fig. 1 ist eine Hydraulikanordnung 1 für ein Fahrzeug gezeigt, die als Hauptkomponenten eine Verstellpumpe 10, einen Kupplungsdruckzweig 20 und einen Kühlungszweig 30 aufweist. Die Verstellpumpe 10 ist mit einer Steuerungseinrichtung 3, insbesondere einem Getriebesteuergerät, verbunden. Ferner sind eine Doppelkupplung 2 des Fahrzeugs mit einer ersten Kupplung 2.1 und einer zweiten Kupplung 2.2 und ein Verbrennungsmotor 4 angedeutet. Die Steuerungseinrichtung 3 ist eingerichtet, sämtliche Aktivitäten im Getriebe zu steuern, also z.B. Pumpenverstellung, Ventilansteuerung, Signalverarbeitung z.B. von Drucksensoren. Die Steuerungseinrichtung 3 kann z.B. als so genannte Transmission Control Unit (TCU) ausgebildet sein.

Dabei ist die Verstellpumpe 10 durch das mit einem Pfeil durchgestrichene Pumpensymbol kenntlich gemacht. Die Verstellpumpe 10 weist einen Sauganschluss 10.1 und eine Schnittstelle 10.4 zu einem Verbrennungsmotor 4 auf. Die Verstellpumpe 10 steht in Verbindung mit dem Kupplungsdruckzweig 20 und dem Kühlungszweig 30. Die beiden Kupplungen 2.1, 2.2 werden bevorzugt mit Öl als Hydraulikfluid versorgt.

Die in der Fig. 1 dargestellten Kupplungen 2.1, 2.2 können exemplarisch als eine unbetätigt offene (normally open / "no") und eine unbetätigt geschlossene (normally closed / "nc") Kupplung ausgeführt sein, oder auch als zwei unbetätigt offene oder zwei unbetätigt geschlossene Kupplungen. Zur Minimierung einer Hysterese im Feinregelbereich (z.B. beim Anfahren des Fahrzeugs) verfügt der Druckregler der no-Kupplung vorzugsweise über eine Kennlinie mit steigendem Druckverlauf, der Druckregler der nc-Kupplung hingegen über eine Kennlinie mit fallendem Druckverlauf.

Zur Regelung der Kupplungsdrücke sind im Kupplungsdruckzweig 20 ein erster Kupplungsdruckregler 21 und ein zweiter Kupplungsdruckregler 22 vorgesehen, insbesondere jeweils direkt gesteuerte Kupplungsdruckregler, die an eine Hauptdruckleitung 20a des Kupplungsdruckzweigs 20 zwischen der Verstellpumpe 10 und den Kupplungen 2.1, 2.2 angeschlossen sind.

Die Hydraulikanordnung 1 weist ferner ein Ableitungsventil (VSys) 11 auf, welches mit der Hauptdruckleitung 20a verbunden ist, und ein Vorsteuerventil (VpSys) 12 für das Ableitungsventil (VSys) 11. Mittels des Ableitungsventil (VSys) 11 kann das Hydraulikfluid zwischen dem Kupplungsdruckzweig 20 und dem Kühlungszweig 30 verteilt werden.

Die Steuerungseinrichtung 3 weist eine erste Schnittstelle 3.1. zum Verbrennungsmotor 4 sowie eine zweite Schnittstelle 3.2 zur Verstellpumpe 10 oder zu einer (nicht dargestellte) Versteileinrichtung und wahlweise auch zu einer (nicht dargestellten) mechanischen Übersetzung auf, die jeweils zwischen der Verstellpumpe 10 und der zweiten Schnittstelle 3.2 angeordnet sein kann. Die Steuerungseinrichtung 3 kann weitere Schnittstellen zu einzelnen Leitungen oder Ventilen des Kupplungsdruckzweigs 20 bzw. des Kühlungszweigs 30 aufweisen, insbesondere um einen Druck des Hydraulikfluids an den jeweiligen Stellen zu erfassen. Die Steuerungseinrichtung 3 ist eingerichtet, basierend auf einer erfassten Drehzahl des Verbrennungsmotors 4 das Fördervolumens der Verstellpumpe 10 einzustellen bzw. ein entsprechendes Steuersignal auszugeben, insbesondere auch in Abhängigkeit von einzelnen Druckmesswerten innerhalb der Zweige 20, 30.

Im Folgenden wird eine Betriebsweise der Hydraulikanordnung 1 beschrieben, bei welcher jedenfalls auch ein Ansteuern erfolgt. Wenn der Kupplungsdruckzweig 20 ausreichend mit Hydraulikfluid versorgt ist, wird über das Ableitungsventil (VSys-Ventil) 11 überschüssiger Volumenstrom in den Kühlungszweig 30 geleitet. Dort durchströmt das Hydraulikfluid zunächst jeweils einen per Bypassventil gesicherten Kühler 31 und Filter 32 und steht dann an einem geschlossenen Mindestdruckventil (VMD) 33 und einem Kupplungskühlungsventil (VKU) 34 an. Beim Mindestdruckventil (VMD) 33 handelt es sich bevorzugt um ein Druckbegrenzungsventil, welches einen Mindestdruck im Kühlungszweig 30 sicherstellen kann. Wenn dieser Mindestdruck erreicht ist, öffnet es und führt den überschüssigen Volumenstrom zum Sauganschluss 10.1 der Verstellpumpe 10. Wahlweise kann auch eine Zwischenstellung des Mindestdruckventils 33 realisiert werden, in welcher es über eine zusätzliche Lamelle Hydraulikfluid bzw. Kühlöl für das Getriebesteuergerät 3 bereitstellt, insbesondere in Verbindung mit einer aktiven Getriebesteuergerätkühlung (TCU-Kühlung) 40. Für das Kupplungskühlungsventil (VKU) 34 können aufgrund eines großen Kühlölbedarfs große Ventilhübe vorgesehen sein. Hierzu kann dieses Ventil durch ein Vorsteuerventil (VpKU) 35 vorgesteuert werden.

Der Mindestdruck im Kühlungszweig 30 ist erforderlich für die Kupplungskühlung. Über das Kupplungskühlungsventil (VKU-Ventil) 34 kann ausgehend von diesem Mindestdruck ein Druck in einer Kupplungskühlungsleitung 38 eingestellt werden, der in einer nachgeschalteten Pumpe 37, insbesondere Saugstrahlpumpe, als Treibdruck fungiert. Die Strahlpumpe 37 kann den höheren Treibdruck in einen niedrigeren Druck unter Vervielfachung des Volumenstroms umwandeln. Da der Treibdruck federseitig auf das Mindestdruckventil (VMD) 33 rückgeführt wird, wird der Mindestdruck bei aktiver Kupplungskühlung automatisch angehoben, wodurch wiederum höhere Treibdrücke und damit höhere Kühlvolumenströme realisiert werden können.

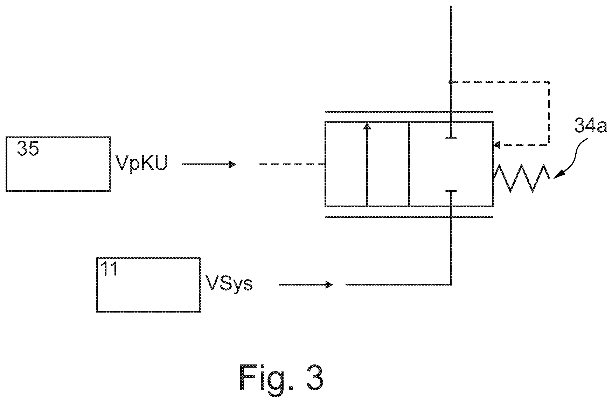

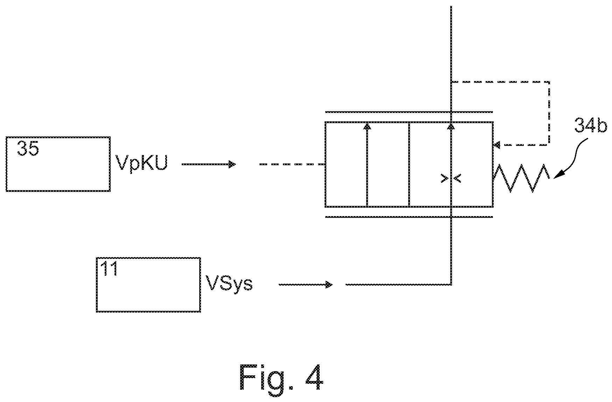

Wahlweise kann der Kühlungszweig 30 anstatt der Kombination aus Mindestdruckventil (VMD) 33 und Kupplungskühlungsventil (VKU) 34 auch ein einzelnes Ventil in Form eines Kühlungsdruckreglers aufweisen. Ein einzelner Druckregler hätte jedoch möglicherweise den Nachteil einer nicht ebenso vorteilhaften Regelbarkeit bei geringen Volumenströmen. In den Figuren 3 und 4 sind zwei Druckregler-Varianten dargestellt.

In der Fig. 1 ist ferner eine zweite Kupplungskühlung bzw. nachgeschaltete Pumpe 37a (insbesondere Saugstrahlpumpe) angedeutet, welche eine optionale Erweiterung der gezeigten Hydraulikanordnung 1 in Verbindung mit einem weiteren Kupplungskühlungsventil (nicht dargestellt) und einem weiteren Vorsteuerventil (nicht dargestellt) für eine separate Kühlung der beiden Kupplungen 2.1, 2.2 aufzeigt. Insbesondere zur Minimierung von Schleppverlusten kann es sinnvoll sein, die einzelnen Kupplungen 2.1, 2.2 separat zu kühlen.

Für den Fall, dass weder die Kupplungen 2.1, 2.2 noch der Kühlungszweig 30 den von der Verstellpumpe 10 bereitgestellten Volumenstrom abnehmen, öffnet ein Rezirkulationsventil (VRZ) 36, über das der überschüssige Volumenstrom zur Saugseite 10.1 der Pumpe rezirkulieren kann, was die Energieaufnahme der Verstellpumpe 10 reduziert. Der überschüssige Volumenstrom kann durch die Verstellpumpe gering gehalten werden. Das Rezirkulationsventil ist dabei nicht notwendigerweise erforderlich, sondern kann optional vorgesehen sein. Wahlweise kann möglicherweise zuviel gefördertes Hydraulikfluidvolumen auch über das Druckbegrenzungsventil (VMD) 33 abgeregelt werden.

Der Abregeldruck des Ableitungsventils (VSys) 11 und der Öffnungsdruck des Rezirkulationsventils (VRZ) 36 können durch eine gemeinsame Vorsteuerleitung angehoben werden. Der Vorsteuerdruck wird durch das direkt angetriebene Vorsteuerventil (VpSys) 12 eingestellt.

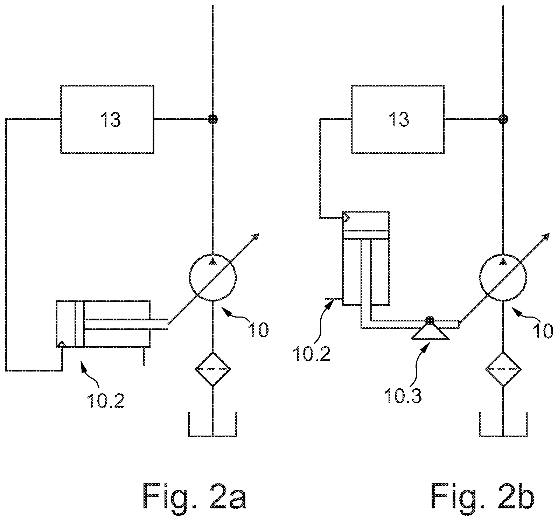

In der Fig. 2a ist eine Verstellpumpe 10 für die in der Fig. 1 gezeigte Hydraulikanordnung 1 gezeigt, die mit einem Ventil zur Pumpenverstellung 13 und einer Verstelleinrichtung 10.2 verbunden ist. Die Verstelleinrichtung 10.2 kann eine hydraulische oder elektrische oder elektrohydraulische Verstelleinrichtung sein, wobei die hydraulische Variante gezeigt ist, insbesondere in Form einer Hubverstelleinrichtung. Die Verstelleinrichtung 10.2 kann auch als eine Komponente der Verstellpumpe 10 in die Verstellpumpe integriert sein.

In der Fig. 2b ist eine Verstellpumpe 10 für die in der Fig. 1 gezeigte Hydraulikanordnung 1 gezeigt, die mit einem Ventil zur Pumpenverstellung 13 und einer Verstelleinrichtung 10.2 verbunden ist. Die Verstelleinrichtung 10.2 kann eine hydraulische oder elektrische oder elektrohydraulische Verstelleinrichtung sein, wobei die hydraulische Variante gezeigt ist. Zwischen der Verstelleinrichtung 10.2 und der Verstellpumpe 10 ist eine mechanische Übersetzung 10.3, insbesondere ein Hebel, angeordnet.

In der Fig. 3 ist ein Kühlungsdruckregler 34a gezeigt, welcher insbesondere bei der in der Fig. gezeigten Hydraulikanordnung anstelle einer Kombination aus einem Mindestdruckventil (VMD) und einem Kupplungskühlungsventil (VKU) eingesetzt werden kann. Der Kühlungsdruckregler 34a steht in Verbindung mit einem Vorsteuerungsventil (VpKU) 35 und einem Ableitungsventil (VSys) 11.

In der Fig. 4 ist ein weiterer Kühlungsdruckregler 34b gezeigt, welcher insbesondere bei der in der Fig. gezeigten Hydraulikanordnung anstelle einer Kombination aus einem Mindestdruckventil (VMD) und einem Kupplungskühlungsventil (VKU) eingesetzt werden kann. Der Kühlungsdruckregler 34b steht in Verbindung mit einem Vorsteuerungsventil (VpKU) 35 und einem Ableitungsventil (VSys) 11. Dieser Kühlungsdruckregler 34b weist einen integrierten Mindestvolumenstrom als Permanentkühlung auf.

### Bezugszeichenliste

- 1: Hydraulikanordnung
- 2: (Nutzfahrzeug)-Doppelkupplung
- 2.1: erste Kupplung
- 2.2: zweite Kupplung
- 3: Steuerungseinrichtung, insbesondere Getriebesteuergerät (TCU)
- 3.1: erste Schnittstelle
- 3.2: zweite Schnittstelle
- 4: Verbrennungsmotor

- 10: Verstellpumpe
- 10.1: Sauganschluss
- 10.2: Verstelleinrichtung, insbesondere hydraulisch oder elektrisch
- 10.3: Übersetzung, insbesondere mechanische Übersetzung
- 10.4: Schnittstelle zwischen Verstellpumpe und Motor
- 11: Ableitungsventil (VSys)
- 12: Vorsteuerventil (Vpsys) für Ableitungsventil
- 13: Ventil zur Pumpenverstellung

- 20: Kupplungsdruckzweig
- 20a: Hauptdruckleitung
- 21: erster Kupplungsdruckregler
- 22: zweiter Kupplungsdruckregler

- 30: Kühlungszweig
- 31: Kühler
- 32: Filter
- 33: Druckbegrenzungsventil bzw. Mindestdruckventil (VMD)
- 34: Kupplungskühlungsventil (VKU)
- 34a: erste Variante eines Kühlungsdruckreglers
- 34b: zweite Variante eines Kühlungsdruckreglers
- 35: Vorsteuerventil (VpKU) für Kupplungskühlungsventil
- 36: Rezirkulationsventil (VRZ)
- 37: (erste) Kupplungskühlung, insbesondere nachgeschaltete Saugstrahlpumpe
- 37a: zweite Kupplungskühlung, insbesondere nachgeschaltete Saugstrahlpumpe
- 38: Kupplungskühlungsleitung
- 40: TCU-Kühlung

## Patentansprüche

1. Hydraulikanordnung (1) zur Ansteuerung und/ oder Kühlung mindestens einer Kupplung (2.1, 2.2) einer Doppelkupplung (2) eines Fahrzeugs, mit:
- einer Pumpe zum Bereitstellen eines Hydraulikfluids für die mindestens eine Kupplung;
- einem Verbrennungsmotor (4), der zum Antreiben der Pumpe eingerichtet ist;
- einem Kupplungsdruckzweig (20) zum Bereitstellen des Hydraulikfluids zum Ansteuern;
- einem Kühlungszweig (30) zum Bereitstellen des Hydraulikfluid zum Kühlen;
wobei die Pumpe als eine Verstellpumpe (10) mit verstellbarem Fördervolumen ausgebildet ist, **dadurch gekennzeichnet, dass** die Hydraulikanordnung eine Steuerungseinrichtung (3) aufweist, die eingerichtet ist, das Fördervolumens der Verstellpumpe (10) in Abhängigkeit einer Drehzahl des Verbrennungsmotors (4) einzustellen.

2. Hydraulikanordnung nach Anspruch 1, **dadurch gekennzeichnet, dass** die Hydraulikanordnung eingerichtet ist, die Verstellpumpe (10) ausschließlich mittels des Verbrennungsmotors (4) anzutreiben.

3. Hydraulikanordnung nach Anspruch 1 oder 2, **dadurch gekennzeichnet, dass** die Hydraulikanordnung eine Verstelleinrichtung (10.2) zum Verstellen des Fördervolumens der Verstellpumpe (10) aufweist, wobei die Verstelleinrichtung bevorzugt elektrisch, hydraulisch oder elektrohydraulisch ansteuerbar ist.

4. Hydraulikanordnung nach einem der vorhergehenden Ansprüche, **dadurch gekennzeichnet, dass** die Hydraulikanordnung eine mechanische und/oder hydraulische Übersetzung (10.3) zum Verstellen des Fördervolumens der Verstellpumpe (10) aufweist.

5. Hydraulikanordnung nacheinem der vorhergehenden Ansprüche, **dadurch gekennzeichnet, dass** der Kühlungszweig (30) sowohl eine erste Kupplungskühlung (37) als auch eine zweite Kupplungskühlung (37a) aufweist, wobei die Steuerungseinrichtung (3) eingerichtet ist, die Hydraulikanordnung derart anzusteuern, dass das Hydraulikfluid mittels der Verstellpumpe sowohl für die erste Kupplungskühlung (37) als auch für die zweite Kupplungskühlung (37a) bereitgestellt wird.

6. Fahrzeug, insbesondere Nutzfahrzeug, mit einer Hydraulikanordnung (1) nach einem der vorhergehenden Ansprüche.

7. Steuerungseinrichtung (3) zum Ansteuern einer Hydraulikanordnung (1) nach einem der vorhergehenden Ansprüche für eine Doppelkupplung (2) eines Fahrzeugs, mit:
- mindestens einer Schnittstelle (3.1, 3.2) zu einem Verbrennungsmotor (4) der Hydraulikanordnung und zu einer Pumpe (10) der Hydraulikanordnung;
**dadurch gekennzeichnet, dass** die Steuerungseinrichtung eingerichtet ist, ein Signal zum Einstellen eines Fördervolumens einer Pumpe (10) auszugeben.

8. Fahrzeug, insbesondere Nutzfahrzeug, mit einer Steuerungseinrichtung nach Anspruch 7.

9. Verfahren zum Ansteuern und/ oder Kühlen mindestens einer Kupplung (2.1, 2.2) einer Doppelkupplung (2) eines Fahrzeugs, mit den Schritten:
- Bereitstellen eines Hydraulikfluids mittels einer Verstellpumpe (10) sowohl in einem Kupplungsdruckzweig (20) als auch einem Kühlungszweig (30) einer Hydraulikanordnung (1) nach einem der vorhergehenden Ansprüche;
- Ansteuern und/ oder Kühlen der mindestens einen Kupplung (2.1, 2.2) durch Antreiben der Verstellpumpe (10) mittels eines Verbrennungsmotors (4) der Hydraulikanordnung (1;
wobei das Fördervolumen der Verstellpumpe (10) in Abhängigkeit einer Drehzahl des Verbrennungsmotors (4) eingestellt wird.

## Claims

1. Hydraulic arrangement (1) for actuating and/or cooling at least one clutch (2.1, 2.2) of a double clutch (2) of a vehicle, having:
- a pump for providing a hydraulic fluid for the at least one clutch;
- an internal combustion engine (4) which is set up to drive the pump;
- a clutch pressure branch (20) for providing the hydraulic fluid for actuating purposes;
- a cooling branch (30) for providing the hydraulic fluid for cooling purposes;
the pump being configured as a variable displacement pump (10) with an adjustable delivery volume, **characterized in that** the hydraulic arrangement has a control device (3) which is set up to set the delivery volume of the variable displacement pump (10) in a manner which is dependent on a rotational speed of the internal combustion engine (4).

2. Hydraulic arrangement according to Claim 1, **characterized in that** the hydraulic arrangement is set up to drive the variable displacement pump (10) exclusively by means of the internal combustion engine (4).

3. Hydraulic arrangement according to Claim 1 or 2, **characterized in that** the hydraulic arrangement has an adjusting device (10.2) for adjusting the delivery volume of the variable displacement pump (10), it preferably being possible for the adjusting device to be actuated electrically, hydraulically or electrohydraulically.

4. Hydraulic arrangement according to one of the preceding claims, **characterized in that** the hydraulic arrangement has a mechanical and/or hydraulic transmission means (10.3) for adjusting the delivery volume of the variable displacement pump (10).

5. Hydraulic arrangement according to one of the preceding claims, **characterized in that** the cooling branch (30) has both a first clutch cooling means (37) and a second clutch cooling means (37a), the control device (3) being set up to actuate the hydraulic arrangement in such a way that the hydraulic fluid is provided by means of the variable displacement pump both for the first clutch cooling means (37) and for the second clutch cooling means (37a).

6. Vehicle, in particular commercial vehicle, having a hydraulic arrangement (1) according to one of the preceding claims.

7. Control device (3) for actuating a hydraulic arrangement (1) according to one of the preceding claims for a double clutch (2) of a vehicle, having:
- at least one interface (3.1, 3.2) to an internal combustion engine (4) of the hydraulic arrangement and to a pump (10) of the hydraulic arrangement;
**characterized in that** the control device is set up to output a signal for setting a delivery volume of a pump (10).

8. Vehicle, in particular commercial vehicle, having a control device according to Claim 7.

9. Method for actuating and/or cooling at least one clutch (2.1, 2.2) of a double clutch (2) of a vehicle, having the steps:
- providing of a hydraulic fluid by means of a variable displacement pump (10) both in a clutch pressure branch (20) and in a cooling branch (30) of a hydraulic arrangement (1) according to one of the preceding claims;
- actuating and/or cooling of the at least one clutch (2.1, 2.2) by way of driving of the variable displacement pump (10) by means of an internal combustion engine (4) of the hydraulic arrangement (1);
the delivery volume of the variable displacement pump (10) being set in a manner which is dependent on a rotational speed of the internal combustion engine (4).

## Revendications

1. Système hydraulique (1) pour la commande et/ou le refroidissement d'au moins un embrayage (2.1, 2.2) d'un embrayage double (2) d'un véhicule, comprenant :
- une pompe destinée à fournir un fluide hydraulique pour ledit au moins un embrayage ;
- un moteur à combustion interne (4) qui est conçu pour entraîner la pompe ;
- une branche de pression d'embrayage (20) destinée à fournir le fluide hydraulique pour la commande ;
- une branche de refroidissement (30) destinée à fournir le fluide hydraulique pour le refroidissement ;
dans lequel la pompe est réalisée sous forme de pompe à cylindrée variable (10) présentant un volume de refoulement réglable, **caractérisé en ce que** le système hydraulique comprend un dispositif de commande (3) qui est conçu pour régler le volume de refoulement de la pompe à cylindrée variable (10) en fonction d'un régime du moteur à combustion interne (4).

2. Système hydraulique selon la revendication 1, **caractérisé en ce que** le système hydraulique est conçu pour entraîner la pompe à cylindrée variable (10) exclusivement au moyen du moteur à combustion interne (4).

3. Système hydraulique selon la revendication 1 ou 2, **caractérisé en ce que** le système hydraulique comprend un dispositif de réglage (10.2) destiné à régler le volume de refoulement de la pompe à cylindrée variable (10), le dispositif de réglage pouvant être commandé de préférence de manière électrique, hydraulique ou électrohydraulique.

4. Système hydraulique selon l'une des revendications précédentes, **caractérisé en ce que** le système hydraulique comprend une transmission (10.3) mécanique et/ou hydraulique destinée à régler le volume de refoulement de la pompe à cylindrée variable (10).

5. Système hydraulique selon l'une des revendications précédentes, **caractérisé en ce que** la branche de refroidissement (30) présente à la fois un premier refroidissement d'embrayage (37) et un deuxième refroidissement d'embrayage (37a), le dispositif de commande (3) étant conçu pour commander le système hydraulique de telle sorte que le fluide hydraulique soit fourni au moyen de la pompe à cylindrée variable à la fois pour le premier refroidissement d'embrayage (37) et pour le deuxième refroidissement d'embrayage (37a).

6. Véhicule, en particulier véhicule utilitaire, comprenant un système hydraulique (1) selon l'une des revendications précédentes.

7. Dispositif de commande (3) destiné à commander un système hydraulique (1) selon l'une des revendications précédentes pour un embrayage double (2) d'un véhicule, comprenant :
- au moins une interface (3.1, 3.2) vers un moteur à combustion interne (4) du système hydraulique et vers une pompe (10) du système hydraulique ;
**caractérisé en ce que** le dispositif de commande est conçu pour délivrer un signal servant au réglage d'un volume de refoulement d'une pompe (10).

8. Véhicule, en particulier véhicule utilitaire, comprenant un dispositif de commande selon la revendication 7.

9. Procédé pour la commande et/ou le refroidissement d'au moins un embrayage (2.1, 2.2) d'un embrayage double (2) d'un véhicule, comprenant les étapes consistant à :
- fournir un fluide hydraulique au moyen d'une pompe à cylindrée variable (10) à la fois dans une branche de pression d'embrayage (20) et dans une branche de refroidissement (30) d'un système hydraulique (1) selon l'une des revendications précédentes ;
- commander et/ou refroidir ledit au moins un embrayage (2.1, 2.2) par entraînement de la pompe à cylindrée variable (10) au moyen d'un moteur à combustion interne (4) du système hydraulique (1) ;
dans lequel le volume de refoulement de la pompe à cylindrée variable (10) est réglé en fonction d'un régime du moteur à combustion interne (4).
